# EUROPÄISCHE PATENTANMELDUNG

(11) **EP 4 825 711 A1**
(43) Veröffentlichungstag der Anmeldung: **21.10.2026**
(21) Anmeldenummer: 26170113.0
(22) Anmeldetag: 01.04.2026
(51) Int. Cl.: B62D 55/253, B62D 55/26

(54) **RAUPENBAND MIT RUTSCHHEMMENDER OBERFLÄCHENSTRUKTUR UND FAHRZEUG MIT DEM RAUPENBAND**

(30) Priorität: 16.04.2025 DE 102025114840
(71) Anmelder: hyCLEANER GmbH & Co. KG, 48599 Gronau (DE)
(72) Erfinder: Kneiber, Josha Felix, 48607 Welbergen (DE)
(74) Vertreter: Patentanwälte Olbricht Buchhold Keulertz

(57) **Zusammenfassung**

Die Erfindung betrifft ein Raupenband, das zur Ausbildung eines Raupenlaufwerkes eines Fahrzeuges zur Behandlung geneigter Oberflächen ausgebildet ist. Das Raupenband läuft im Betrieb um Umlenkrollen des Raupenlaufwerkes in eine Laufrichtung um. Das Raupenband weist eine den Umlenkrollen zuzuwendende Innenseite und eine von den Umlenkrollen abzuwendende Außenseite aufweist. Die Außenseite wird zumindest teilweise von zumindest einem vom Raupenband umfassten Kontaktsegment ausgebildet. Das Kontaktsegment weist mehrere Kontaktelemente auf, die von der Innenseite abgewandt abstehend und zumindest in einer Betriebsstellung an eine Betriebsebene angrenzend angeordnet sind. Das Kontaktsegment bildet zumindest zwischen einem ersten der Kontaktelemente und einem zweiten der Kontaktelemente zumindest einen ersten an die Betriebsebene angrenzenden Ableitkanal aus. Der Ableitkanal erstreckt sich länglich in eine erste zur Betriebsebene parallele Ableitkanalrichtung und hat eine in eine zur Betriebsebene rechtwinklige Tiefenrichtung zur Innenseite gemessene Ableitkanaltiefe. Erfindungsgemäß bildet das Kontaktsegment zwischen dem ersten Kontaktelement und einem dritten der Kontaktelemente zumindest einen ersten an die Betriebsebene angrenzenden Sammelkanal aus. Der erste Sammelkanal erstreckt sich länglich in eine erste zur Betriebsebene parallele Sammelkanalrichtung, die zur Ableitkanalrichtung angewinkelt ist, und hat eine in die Tiefenrichtung gemessene Sammelkanaltiefe, die kleiner als die Ableitkanaltiefe ist.

## Beschreibung

Die Erfindung betrifft ein Raupenband. Das Raupenband ist zur Ausbildung eines Raupenlaufwerkes eines Fahrzeuges zur Behandlung geneigter Oberflächen und zum Umlaufen von Umlenkrollen des Raupenlaufwerkes in eine Laufrichtung ausgebildet. Das Raupenband weist eine den Umlenkrollen zuzuwendende Innenseite und eine von den Umlenkrollen abzuwendende Außenseite auf. Die Außenseite ist zumindest teilweise von einem vom Raupenband umfassten Kontaktsegment ausgebildet. Das Kontaktsegment weist mehrere Kontaktelemente auf, die von der Innenseite abgewandt abstehend und zumindest in einer Betriebsstellung an eine Betriebsebene angrenzend angeordnet sind. Das Kontaktsegment bildet zumindest zwischen einem ersten der Kontaktelemente und einem zweiten der Kontaktelemente zumindest einen ersten an die Betriebsebene angrenzenden Ableitkanal aus. Der erste Ableitkanal erstreckt sich zumindest abschnittsweise länglich in eine erste zur Betriebsebene parallele Ableitkanalrichtung. Der erste Ableitkanal hat eine in eine zur Betriebsebene rechtwinklige Tiefenrichtung gemessene Ableitkanaltiefe.

Ein derartiges Raupenband ist aus dem Stand der Technik bekannt. Es soll eine Traktion des Fahrzeuges auf den geneigten Oberflächen, insbesondere Dachflächen, ermöglichen. Die Kontaktelemente des bekannten Raupenbandes sind in unterschiedliche zur Betriebsebene parallele Richtungen äquidistant zueinander angeordnet und in einer Draufsicht rund ausgebildet.

Das bekannte Raupenband hat sich als nachteilig herausgestellt. Insbesondere bei Feuchtigkeit, die auf den Oberflächen aufgrund von Regen und von für die Behandlung genutzten Reinigungsflüssigkeiten regelmäßig gegeben ist, und größeren Oberflächenneigungen ist die Traktion mangelhaft. Die mangelnde Traktion führt immer wieder zu Abstürzen genannter Fahrzeuge, die mit erheblichen Materialschäden und einer Gefährdung von Leib und Leben beteiligter Personen einhergeht.

Aufgabe der vorliegenden Erfindung ist die Bereitstellung eines Raupenbandes, durch das die Traktion des Fahrzeuges insbesondere bei feuchten und stark geneigten Oberflächen verbessert ist, um Abstürze zuverlässig zu verhindern. Ferner ist Aufgabe der Erfindung die Bereitstellung eines Fahrzeuges mit diesem Raupenband.

Erfindungsgemäß bildet das Kontaktsegment zwischen dem ersten Kontaktelement und einem dritten der Kontaktelemente zumindest einen ersten an die Betriebsebene angrenzenden Sammelkanal aus. Der Sammelkanal erstreckt sich derart zumindest abschnittsweise länglich in eine erste Sammelkanalrichtung, dass der erste Sammelkanal in den ersten Ableitkanal mündet. Die erste Sammelkanalrichtung ist zur Betriebsebene parallel und zur ersten Ableitkanalrichtung angewinkelt ausgerichtet. Eine in die Tiefenrichtung gemessene Sammelkanaltiefe des ersten Sammelkanals ist kleiner als die Ableitkanaltiefe.

Es hat sich herausgestellt, dass aneinander anschließende Kanäle mit unterschiedlichen Tiefen zu einer verbesserten Abführung von Flüssigkeit zwischen dem Kontaktsegment und den Oberflächen führen. Der Ableitkanal ermöglicht aufgrund der größeren Ableitkanaltiefe zuverlässig die Ableitung größerer Mengen gesammelter Flüssigkeit. Zuvor wird die Flüssigkeit hauptsächlich von dem zumindest einen ersten Sammelkanal von den Oberflächen aufgenommen. Durch die geringere Sammelkanaltiefe hat der Sammelkanal insbesondere eine Kapillarwirkung auf die aufzunehmende Flüssigkeit. Ferner ergeben sich beim Aufsetzen des Kontaktsegmentes auf die Oberflächen bei Verwendung typischer Werkstoffe lokale Verformungen der Kontaktelemente, durch die eine Sogwirkung für die Feuchtigkeit erzeugt wird. Somit ist der Sammelkanal besonders gut zur vollständigen Aufnahme der Flüssigkeit von den Oberflächen geeignet, die insbesondere anschließend vom ersten Ableitkanal abzuleiten ist. Das führt zur verbesserten Traktion von mit dem Raupenband ausgestatteten Fahrzeugen. Das trifft insbesondere bei besonders feuchten und/oder stark geneigten Oberflächen zu.

Das Raupenband ist insbesondere ein endloses Band, das zur Umschlingung der Umlenkrollen ausgebildet ist. Das Raupenband ist ein- oder mehrteilig, insbesondere aus zumindest einem flexibel verformbaren Material ausgebildet. Das Raupenband umfasst insbesondere einen die Innenseite ausbildenden Innenteil und einen die Außenseite ausbildenden Außenteil. Der Innenteil und der Außenteil sind besonders bevorzugt mittels einer Klettverbindung oder anderweitig, bevorzugt lösbar, miteinander verbunden. Innenseitig weist das Raupenband, insbesondere das Innenteil, vorzugsweise zumindest ein Element zur Herstellung eines Formschlusses mit zumindest einer der Umlenkrollen auf, wobei der Formschluss bevorzugt in die Laufrichtung und/oder quer dazu herzustellen ist. Besonders bevorzugt weist das Raupenband innenseitig eine Mehrzahl von sich quer zur Laufrichtung erstreckenden Querrippen zur Übertragung einer Kraft in die Laufrichtung und/oder zumindest eine insbesondere mittig angeordnete und sich in die Laufrichtung erstreckende Längsrippe auf, die insbesondere mehrteilig ausgebildet ist und zur Übertragung einer Kraft quer zur Laufrichtung dient. Die Laufrichtung ist insbesondere gleich einer Längsrichtung.

Das Raupenband umfasst bevorzugt eine Mehrzahl von Kontaktsegmenten, die in die Laufrichtung zueinander versetzt angeordnet sind. Bevorzugt sind die Kontaktsegmente gleich ausgebildet und ausschließlich translatorisch zueinander in die Laufrichtung versetzt angeordnet. Vorzugsweise ist das zumindest eine Kontaktsegment mehrschichtig ausgebildet. Insbesondere sind die Kontaktelemente an einer sich flächig parallel zur Betriebsebene erstreckenden Tragschicht des Kontaktsegmentes angeordnet, die quer zur Betriebsebene von einer Grundschicht, die sich ebenfalls flächig parallel zur Betriebsebene erstreckt, des Kontaktsegmentes beabstandet ist. Zwischen der Tragschicht und der Grundschicht ist besonders bevorzugt zumindest eine quer zur Laufrichtung durchgehend ausgebildete Ausnehmung angeordnet, um eine bestmögliche Nachgiebigkeit des Kontaktsegmentes zu erreichen.

Bei den Kontaktelementen handelt es sich bevorzugt um nach außen zumindest geringfügig vorstehende Profilblöcke oder Stollen, die untereinander unverbunden ausgebildet sind. Bevorzugt schneiden weder die Kontaktelemente noch weitere Komponenten des Raupenbandes die Betriebsebene. Der zumindest eine Sammelkanal und/oder der zumindest eine Ableitkanal sind/ist insbesondere, bevorzugt ausschließlich, durch zumindest zwei der Kontaktelemente gebildet, zwischen denen der jeweilige Kanal sich hindurcherstreckt und an die er bevorzugt unmitttelbar angrenzt. Vorzugsweise weisen die Kontaktelemente eine von der Innenseite abgewandte Kontaktelementaußenfläche auf, die sich zumindest abschnittsweise, insbesondere vollständig eben erstreckt und je nach Stellung des Raupenbandes in der Betriebsebene angeordnet ist.

Der zumindest eine erste Ableitkanal und der zumindest eine erste Sammelkanal sind zur Betriebsebene hin bevorzugt offen ausgebildet. Der Ableitkanal und der Sammelkanal sind in jeweiligen Schnitten vorzugsweise zumindest im Wesentlichen U-förmig ausgebildet. Die Tiefen werden bevorzugt zwischen einem Boden bzw. Mittelteil der U-Form und der Betriebsebene gemessen, an die die Kontaktelemente angrenzen. Die Sammelkanaltiefe und/oder die Ableitkanaltiefe bleiben in die Sammelkanalrichtung bzw. in die Ableitkanalrichtung bevorzugt konstant. Besonders bevorzugt bleibt die gesamte Querschnittsfläche des jeweiligen Kanals in die Sammelkanalrichtung bzw. in die Ableitkanalrichtung konstant. Dies gilt zumindest abgesehen von etwaigen Abzweigungen oder Einmündungen.

Nachfolgend werden über das erste Kontaktelement, das zweite Kontaktelement und das dritte Kontaktelement hinausgehende, weitere Kontaktelemente beschrieben. Diese werden zwar ausgehend vom dritten Kontaktelement weiternummeriert benannt, setzen jedoch jeweils nicht das Vorhandensein sämtlicher gemäß der Nummerierung vorhergehender Kontaktelemente voraus.

Vorzugsweise ist die Sammelkanaltiefe mindestens halb so groß wie die Ableitkanaltiefe. Bevorzugt beträgt die Sammelkanaltiefe im Wesentlichen zwei Drittel der Ableitkanaltiefe. Die Ableitkanaltiefe hat besonders bevorzugt eine Größe von 1,5mm und/oder die Sammelkanaltiefe hat besonders bevorzugt eine Größe von 1 mm. Durch eine derartige Dimensionierung des ersten Sammelkanals relativ zum ersten Ableitkanal ist ein besonders zielführender Kompromiss zwischen Flüssigkeitsleitkapazität einerseits und Sogwirkung bzw. kumulierter Kontaktelementaußenfläche gegeben. Durch eine maximale kumulierte Kontaktelementaußenfläche lässt sich die Neigung zu befahrender Oberflächen maximieren.

Bevorzugt ist eine quer zur ersten Sammelkanalrichtung und parallel zur Betriebsebene gemessene Sammelkanalbreite kleiner als eine quer zur ersten Ableitkanalrichtung und parallel zur Betriebsebene gemessene Ableitkanalbreite. Das bedeutet, dass nicht nur die Tiefe des Sammelkanals geringer als diejenige des Ableitkanals, sondern dass auch die Breite des Sammelkanals kleiner ist als diejenige des Ableitkanals. Besonders bevorzugt ist die Sammelkanalbreite höchstens halb so groß wie die Ableitkanalbreite. Insbesondere beträgt die Sammelkanalbreite 0,4 mm und/oder die Ableitkanalbreite 1,5 mm. Es hat sich herausgestellt, dass durch die vergleichsweise geringe Breite die Kapillarwirkung besonders signifikant auszubilden ist. Außerdem ist auf diese Weise die Flüssigkeitsführungskapazität des Ableitkanals zu vergrößern, ohne die kumulierte Kontaktelementaußenfläche, die Summe der Größen der Kontaktelementaußenflächen des Kontaktsegmentes, verkleinern zu müssen. Insbesondere bei Trockenheit beeinflusst die Breitendifferenz die Traktion durch das Zulassen einer größeren kumulierten Kontaktelementaußenfläche positiv.

Vorzugsweise erstrecken/erstreckt sich der zumindest eine erste Ableitkanal und/oder der zumindest eine erste Sammelkanal in einer Draufsicht gerade in die erste Sammelkanalrichtung bzw. die erste Ableitkanalrichtung. Das bedeutet insbesondere, dass der jeweilige Kanal entlang seiner Längserstreckung frei von Richtungsänderungen, beispielsweise in Form von Bögen oder Ecken, ist. Die erste Ableitkanalrichtung und die erste Sammelkanalrichtung sind bevorzugt um zumindest 45° zueinander angewinkelt, besonders bevorzugt rechtwinklig zueinander ausgerichtet. Die Draufsicht bedeutet eine zur Betriebsebene rechtwinklige Blickrichtung. Die gerade Erstreckung gilt insbesondere für sämtliche Sammelkanäle und/oder Ableitkanäle. Die gerade Erstreckung vereinfacht die Leitung der Flüssigkeit weitestmöglich und beschleunigt somit ihre Abführung.

Die erste Ableitkanalrichtung oder die erste Sammelkanalrichtung entspricht bevorzugt der Laufrichtung oder ist quer zur Laufrichtung ausgerichtet. Besonders bevorzugt entspricht die erste Ableitkanalrichtung der Laufrichtung und ist die erste Sammelkanalrichtung quer zur Laufrichtung ausgerichtet. Durch diese Anordnung der genannten Richtungen kann eine besonders große Flüssigkeitsmenge bei einem typischerweise allmählichen Aufsetzen des Kontaktsegmentes auf der Betriebsebene entgegen der Laufrichtung entweichen. Je schneller die Flüssigkeit entweichen kann, desto weniger beeinträchtigt sie die Traktion und desto größer ist die sicher zu befahrende Neigung. Insbesondere erlaubt die erfindungsgemäße Ausbildung das sichere Befahren von Oberflächen, die zur Horizontalen um mehr als 25° geneigt sind.

Der erste Ableitkanal erstreckt sich in der Draufsicht bevorzugt von einem ersten Ende des Kontaktsegmentes bis zu einem relativ zum ersten Ende gegenüberliegenden, zweiten Ende des Kontaktsegmentes. Die genannten Enden sind insbesondere in die Laufrichtung voneinander beabstandet. Die durchgängige Ausbildung des ersten Ableitkanals erleichtert das Entweichen der Flüssigkeit, insbesondere im Falle einer geraden Ausbildung des Ableitkanals, besonders.

Vorzugsweise bildet das Kontaktsegment mehrere erste Sammelkanäle aus, die voneinander beanstandet in den ersten Ableitkanal münden. Die ersten Sammelkanäle sind bevorzugt parallel zueinander und/oder mit einer einheitlichen Breite oder gar einem einheitlichen Querschnitt ausgebildet. Durch die Mehrzahl von in den ersten Ableitkanal einmündenden ersten Sammelkanälen kann auch durch die weniger tiefen Sammelkanäle eine ausreichende flächige Flüssigkeitsableitung erreicht werden.

Alternativ oder zusätzlich bildet das Kontaktsegment bevorzugt zumindest zwei erste Ableitkanäle aus, in die der zumindest eine erste Sammelkanal mündet. Das bedeutet insbesondere, dann der zumindest eine erste Sammelkanal mit einem Ende in einen ersten Ableitkanal und mit einem gegenüberliegenden Ende in einen anderen ersten Ableitkanal mündet. Besonders bevorzugt trifft das auf die Mehrzahl der ersten Sammelkanäle zu. Die ersten Ableitkanäle sind besonders bevorzugt analog zu den ersten Sammelkanälen parallel zueinander und/oder mit einheitlicher Breite oder gar einheitlichem Querschnitt ausgebildet. Auf diese Weise lässt sich eine Art Kanalraster durch das Kontaktsegment ausbilden, durch das unbeabsichtigte Flüssigkeitseinschlüsse zwischen einem der Kontaktelemente und der Betriebsebene besonders zuverlässig zu vermeiden sind, die die Traktion massiv einschränken.

Das Kontaktsegment bildet bevorzugt zwischen dem ersten Kontaktelement und einem vierten der Kontaktelemente zumindest einen zweiten an die Betriebsebene angrenzenden Sammelkanal aus. Der zweite Sammelkanal erstreckt sich zumindest abschnittsweise länglich in eine zweite Sammelkanalrichtung, die zur Betriebsebene parallel und zur ersten Sammelkanalrichtung angewinkelt, insbesondere rechtwinklig, angeordnet ist. Der zweite Sammelkanal ist besonders bevorzugt in den zumindest einen ersten Sammelkanal mündend oder den zumindest einen ersten Sammelkanal kreuzend ausgebildet.

Die in Bezug auf den zumindest einen ersten Sammelkanal vor- oder nachbeschriebenen Merkmale gelten bevorzugt alternativ oder zusätzlich in Bezug auf den zumindest einen zweiten Sammelkanal. Insbesondere gleicht die zweite Sammelkanalrichtung der ersten Ableitkanalrichtung. Durch diese Zusammensetzung der Sammelkanäle lässt sich auf einfache Weise ein geringer maximaler Abstand der Oberflächenpunkte der Kontaktelelementaußenflächen von den unterschiedlichen Sammelkanälen erreichen, wodurch die Flüssigkeitsabführung effektiv abgesichert ist.

Bevorzugt haben zwei oder alle benachbarten zweiten Sammelkanäle einen zweiten Sammelabstand voneinander, der einem ersten Sammelabstand zweier oder sämtlicher benachbarter erster Sammelkanäle voneinander entspricht. Die Sammelkanäle sind besonders bevorzugt durch Kontaktelemente mit quadratischen Kontaktelementaußenflächen ausgebildet. Insbesondere ist zwischen benachbarten Sammelkanälen lokal, insbesondere abgesehen von ihrer Längserstreckung, nur je ein Kontaktelement angeordnet. Der Abstand der zwei ersten und/oder zweiten Sammelkanäle voneinander beträgt besonders bevorzugt zumindest im Wesentlichen 2 mm.

Der zumindest eine erste Sammelkanal und/oder der zumindest eine zweite Sammelkanal sind/ist wenigstens einseitig, vorzugsweise durch zumindest vier, bevorzugt durch zumindest sechs, besonders bevorzugt durch zumindest acht, Kontaktelemente begrenzt. Das bedeutet, dass sich der jeweilige Sammelkanal an dieser Zahl von Kontaktelementen entlang erstreckt. Das gilt insbesondere, ohne dass auf diesem Weg ein Ableitkanal gekreuzt wird. Besonders bevorzugt hat der jeweilige Sammelkanal von einem ersten in einen Ableitkanal mündenden Ende bis zu einem gegenüberliegenden in einen anderen Ableitkanal mündenden Ende eine Länge von mindestens, 8 mm, 12 mm oder 16 mm, wobei von etwaigen kreuzenden Sammelkanälen, deren Zahl insbesondere der Zahl der Kontaktelemente abzüglich eins entspricht, abgesehen wird. Es hat sich gezeigt, dass die Sammelkanäle mit den genannten Längen ihre Funktionen bei üblichen Anwendungsfällen des Fahrzeuges noch hinreichend ausführen, ohne an ihre Kapazitätsgrenzen zu stoßen, ohne die kumulierte Kontaktelementaußenfläche unnötig einzuschränken.

Zwischen dem ersten Kontaktelement und einem fünften der Kontaktelemente bildet das Kontaktsegment bevorzugt zumindest einen zweiten an die Betriebsebene angrenzenden Ableitkanal aus. Der zumindest eine zweite Ableitkanal erstreckt sich länglich in eine zweite zur Betriebsebene parallele Ableitkanalrichtung, die zur ersten Ableitkanalrichtung angewinkelt, insbesondere rechtwinklig, angeordnet ist. Der zumindest eine zweite Ableitkanal mündet in den ersten Ableitkanal oder kreuzt den ersten Ableitkanal vorzugsweise. Die in Bezug auf den zumindest einen ersten Ableitkanal vor- oder nachbeschriebenen Merkmale gelten bevorzugt alternativ oder zusätzlich in Bezug auf den zumindest einen zweiten Ableitkanal.

Die zweite Ableitkanalrichtung gleicht insbesondere der ersten Sammelkanalrichtung, wobei der zweite Sammelkanal bevorzugt in den zweiten Ableitkanal mündet. Das Kontaktsegment bildet bevorzugt mehrere zweite Ableitkanäle aus, die insbesondere parallel zueinander angeordnet sind. Durch die zueinander angewinkelten Ableitkanäle wird sichergestellt, dass die abzuleitende Flüssigkeit insofern effizient abzuleiten ist, als sie keine unnötig langen Wege zurücklegen muss. Im Wesentlichen kann die Flüssigkeit zu dem Rand des Kontaktsegmentes abgeleitet werden, der am nächsten liegt. Hierdurch wird die Ableitkapazität insgesamt erheblich erhöht, ohne die kumulierte Kontaktelementaußenfläche beschränken zu müssen.

Das Kontaktsegment bildet bevorzugt unterschiedlich große Gruppen von Kontaktelementen aus. Die Gruppen werden insbesondere vollumfänglich von Ableitkanälen und/oder einem Rand des Kontaktsegmentes umgrenzt. Vorzugsweise sind zwischen zwei ersten Ableitkanälen und/oder zwischen zwei zweiten Ableitkanälen unterschiedlich große Gruppen von Kontaktelementen angeordnet. Die Kontaktelemente derselben Gruppe sind in einer Draufsicht allenfalls durch erste und/oder zweite Sammelkanäle voneinander beabstandet, nicht jedoch von Ableitkanälen. Die Gruppen umfassen bevorzugt zumindest vier und/oder maximal 40 Kontaktelemente, wobei das Kontaktsegment bevorzugt zumindest drei unterschiedliche Gruppengrößen ausbildet. Bevorzugt umfasst beispielsweise eine erste der Gruppen vier Kontaktelemente und eine weitere der Gruppen 30 Kontaktelemente. Durch die unterschiedlichen Größen lässt sich je nach lokaler Belastung, das heißt Flächenpressung, und Abstand vom Rand des Kontaktsegmentes das Verhältnis von Sammelkanälen zu Ableitkanälen anpassen, um insgesamt die bestmögliche Traktion herstellen zu können.

Die Zahl der zueinander parallelen Ableitkanäle oder zueinander parallelen Sammelkanäle ist bevorzugt größer als fünf, besonders bevorzugt größer als acht, insbesondere größer als zehn.

Die genannten Ableitkanäle oder Sammelkanäle sind vorzugsweise erste oder zweite Sammel- bzw. Ableitkanäle und erstrecken sich in die Laufrichtung oder quer dazu. Bei diesen Mindestkanalzahlen ist das Raupenband besonders gut für Fahrzeuge typischen Ausmaßes und typischer Gewichte ausgelegt.

Zumindest ein Teil der Kontaktelemente weist in einer Draufsicht bevorzugt eine rechteckige, insbesondere quadratische, Kontur und insbesondere Kontaktelementaußenfläche auf. Insbesondere weist zumindest ein überwiegender Teil der Kontaktelemente diese Kontur, besonders bevorzugt eine einheitliche Kontur, auf. Insbesondere gilt das bevorzugt für sämtliche Kontaktelemente, die nicht an einen Ableitkanal grenzen. Dadurch lassen sich unnötige Flüssigkeitsverwirbelungen an Sammelkanalkreuzungen effektiv vermeiden.

Zumindest eines der Kontaktelemente weist in der Draufsicht bevorzugt eine Kontur auf, die einen bogenförmigen Abschnitt oder eine Rundung hat. Besonders bevorzugt ist die Rundung viertelkreisförmig ausgebildet. Dies gilt bevorzugt zumindest für das erste Kontaktelement und besonders für mehrere der Kontaktelemente. Mit der Rundung grenzt die Kontur vorzugsweise an einen ersten Ableitkanal und/oder einen zweiten Ableitkanal an. Durch die Rundung werden im Übergangsbereich der zueinander angewinkelten Ableitkanäle nachteilige Verwirbelungen in Kauf genommen, jedoch eine erheblich vorteilhafte Möglichkeit zur Umlenkung der Flüssigkeit von einem der Ableitkanäle in den jeweils anderen erreicht.

Bevorzugt umfasst das Raupenband zumindest zehn Kontaktsegmente. Eine quer zur Laufrichtung gemessene Breite des zumindest einen Kontaktsegmentes oder sämtlicher Kontaktsegmente entspricht bevorzugt zumindest im Wesentlichen einer Breite des (gesamten) Raupenbandes. Eine in die Laufrichtung gemessene Längserstreckung des Kontaktsegmentes ist bevorzugt kleiner als die quer zur Laufrichtung des Raupenbandes gemessene Breite des Kontaktsegmentes. Optimalerweise beträgt die Breite 100 mm, wohingegen die Länge 44 mm beträgt. Mit dieser Größe des Kontaktsegmentes werden die vorbeschriebenen Vorteile der beschriebenen Kanäle optimal genutzt.

Die Kontaktelemente sind bevorzugt aus einem insbesondere elastisch nachgiebigem Material ausgebildet. Besonders bevorzugt sind die Kontaktelemente zumindest überwiegend aus Kautschuk, vorzugsweise Naturkautschuk oder synthetischem Kautschuk, insbesondere ChloroprenKautschuk (Neopren), ausgebildet. Insbesondere gilt dies für das zumindest eine oder sämtliche Kontaktsegmente.

Die Aufgabe wird weiterhin gelöst durch ein Fahrzeug zur Behandlung geneigter Oberflächen, das einen Fahrzeugrahmen, eine Oberflächenbehandlungsvorrichtung und ein Fahrwerk aufweist. Die Oberflächenbehandlungsvorrichtung ist am Fahrzeugrahmen angeordnet. Das Fahrwerk ist zum Fahren auf der geneigten Oberfläche ausgebildet und weist zumindest ein Raupenlaufwerk auf, das zumindest zwei Umlenkrollen und zumindest ein im Betrieb um die Umlenkrollen umlaufendes Raupenband umfasst, wie es vorbeschrieben ist.

Bei dem Fahrzeug handelt es sich insbesondere um ein bevorzugt drahtlos fernzusteuerndes Fahrzeug. Alternativ oder zusätzlich ist das Fahrzeug bevorzugt zu einem autonomen Betrieb ausgebildet. Das Fahrzeug dient insbesondere zur Reinigung der geneigten Oberflächen. Das Fahrzeug ist vorzugsweise zur Behandlung von geneigten Glasoberflächen und/oder zur Behandlung von geneigten Oberflächen von Photovoltaik-Anlagen ausgebildet. Die Oberflächen zeichnen sich insbesondere durch eine zumindest im Wesentlichen ebene Ausbildung aus und liegen besonders bevorzugt zumindest lokal in der Betriebsebene.

Bei der Oberflächenbehandlungsvorrichtung handelt es sich insbesondere um eine Reinigungsvorrichtung. Die Oberflächenbehandlungsvorrichtung weist bevorzugt eine insbesondere drehbar gelagerte Bürste auf. Die Oberflächenbehandlungsvorrichtung umfasst insbesondere eine Einrichtung zur Aufbringung einer Reinigungsflüssigkeit auf die Oberfläche. Die Einrichtung ist insbesondere dazu ausgebildet, von einem lokalen Wassernetz mit Wasser versorgt zu werden. Insbesondere umfasst die Einrichtung einen Schlauch zur Zuführung des Wassers und bevorzugt eine um eine zur Betriebsebene angewinkelte Achse schwenk- oder drehbare Schlauchführung und/oder eine Schlauchrolle über dem Fahrzeugrahmen. Durch die Nutzung einer wasserhaltigen Reinigungsflüssigkeit lässt sich die Reinigungswirkung erheblich verbessern, wobei aufgrund der vorbeschriebenen Ausbildung des zumindest einen Kontaktsegmentes eine ausreichende Traktion erhalten bleibt.

Das Fahrwerk umfasst insbesondere zwei quer zu einer Fahrtrichtung versetzt angeordnete Raupenlaufwerke, die insbesondere spiegelsymmetrisch zueinander ausgebildet und angeordnet sind. Zwischen den zwei Umlenkrollen des zumindest einen Raupenlaufwerkes sind bevorzugt mehrere Stützrollen angeordnet, an denen ein Bodentrum des Raupenbandes entlang verläuft, angeordnet. Pro Raupenlaufwerk ist bevorzugt zumindest eine Umlenkrolle motorisch angetrieben.

Weitere Einzelheiten und Vorteile der Erfindung sind den nachfolgend beschriebenen, schematisch dargestellten Figuren zu entnehmen; es zeigen
- Fig. 1: ein erfindungsgemäßes Fahrzeug in einer perspektivischen Darstellung,
- Fig. 2: ein Kontaktsegment des Fahrzeuges gemäß Fig. 1 in einer Draufsicht,
- Fig. 3: das Kontaktsegment gemäß Fig. 2 in einer Frontansicht,
- Fig. 4: das Kontaktsegment gemäß Fig. 2 in einer Seitenansicht.

Die nachfolgend beschriebenen Merkmale des erfindungsgemäßen Ausführungsbeispiels können auch in anderen Kombinationen als dargestellt Gegenstand der Erfindung sein, stets jedoch zumindest in Kombination mit den Merkmalen des Anspruchs 1. Sofern sinnvoll sind gleichartige Komponenten des Ausführungsbeispiels mit identischen Bezugsziffern versehen.

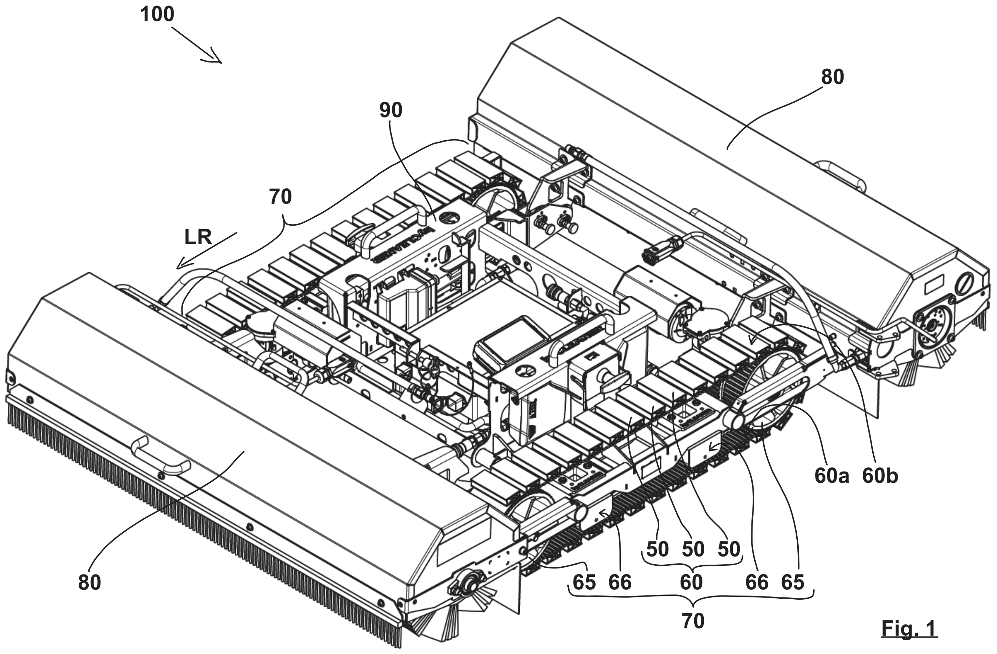

Fig. 1 veranschaulicht ein erfindungsgemäßen Fahrzeug 100. Das Fahrzeug 100 umfasst einen Fahrzeugrahmen 90 und zwei am Fahrzeugrahmen 90 angeordnete Oberflächenbehandlungsvorrichtungen 80, jeweils mit einer im Betrieb rotierenden Bürste.

Am Fahrzeugrahmen 90 ist ein Fahrwerk mit zwei Raupenlaufwerken 70 angeordnet. Jedes Raupenlaufwerk 70 umfasst zwei Umlenkrollen 65 und dazwischen zwei Stützrollen 66. Pro Raupenlaufwerk läuft ein Raupenband 60 um die genannten Rollen 65, 66 um. Das Raupenband 60 hat eine den Rollen 65, 66 zugewandte Innenseite 60a und eine von den Rollen 65, 66 abgewandte Außenseite 60b hat. Außenseitig weist jedes Raupenband 60 eine Mehrzahl von in eine Laufrichtung LR aufgereihten Kontaktsegmenten 50 auf.

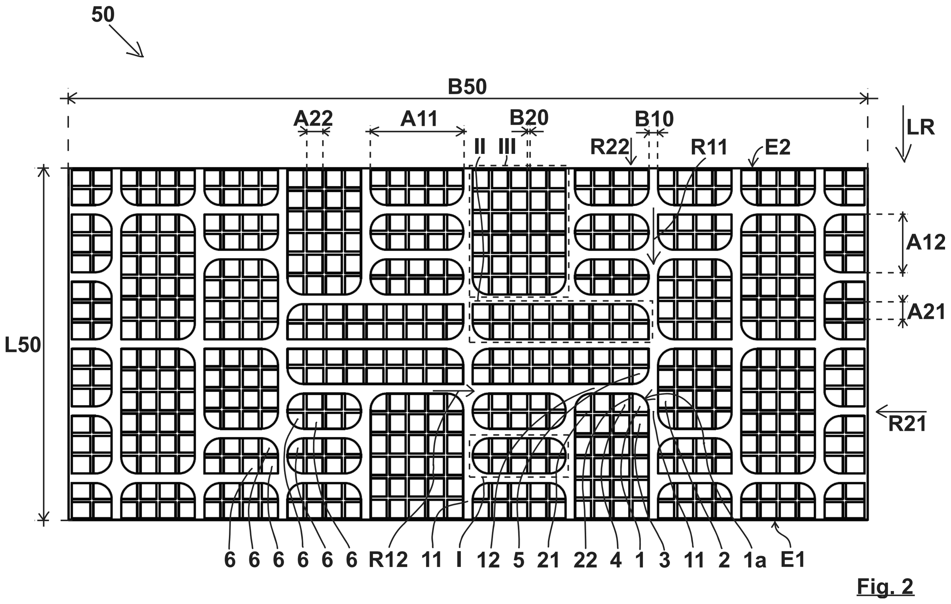

Jedes Kontaktsegment 50 ist in einer Draufsicht gemäß Fig. 2 ausgebildet. Das Kontaktsegment 50 weist eine Vielzahl von Kontaktelementen 1, 2, 3, 4, 5, 6 (Bezugszeichen exemplarisch vergeben) auf, die von der Innenseite 60a abgewandt abstehen und zumindest in einer Betriebsstellung an eine Betriebsebene BE angrenzen, auf der das Fahrzeug 100 aufsteht.

Unter anderem zwischen einem ersten der Kontaktelemente 1 und einem zweiten der Kontaktelemente 2 ist ein erster an die Betriebsebene BE angrenzender Ableitkanal 11 ausgebildet. Der erste Ableitkanal 11 erstreckt sich länglich gerade und durchgehend in eine erste zur Betriebsebene BE parallele Ableitkanalrichtung R11. Das Kontaktsegment 50 bildet mehrere solcher erster Ableitkanäle 11 aus, die sich parallel zueinander erstrecken. Die ersten Ableitkanäle 11 erstrecken sich dabei überwiegend von einem ersten Ende E1 des Kontaktsegmentes 50 bis zu einem in die Längsrichtung LR relativ zum ersten Ende E1 versetzten zweiten Ende E2 des Kontaktsegmentes 50.

Unter anderem zwischen dem ersten Kontaktelement 1 und einem fünften der Kontaktelemente 5 ist einer von mehreren zweiten an die Betriebsebene BE angrenzenden Ableitkanälen 12 ausgebildet. Die zweiten Ableitkanäle 12 erstrecken sich länglich und gerade in eine zweite zur Betriebsebene BE parallele Ableitkanalrichtung R12, die um 90° zur ersten Ableitkanalrichtung R11 angewinkelt ist. Unter anderem zwischen dem ersten Kontaktelement 1 und einem dritten der Kontaktelemente 3 ist einer von mehreren ersten an die Betriebsebene BE angrenzenden Sammelkanälen 21 ausgebildet, die sich länglich in eine zur zweiten Ableitkanalrichtung R12 parallele erste Sammelkanalrichtung R21 erstrecken. Der genannte erste Sammelkanal 21 mündet einenends in den beschriebenen ersten Ableitkanal 11 und anderenends in einen weiteren ersten Ableitkanal 11. Unter anderem zwischen dem ersten Kontaktelement 1 und einem vierten der Kontaktelemente 4 ist einer von mehreren zweiten an die Betriebsebene BE angrenzenden Sammelkanälen 22 ausgebildet, die sich länglich in eine zur ersten Ableitkanalrichtung R11 parallele zweite Sammelkanalrichtung R22 erstrecken und einenends in den genannten zweiten Ableitkanal 12 und anderenends an das erste Ende E1 des Kontaktelementes 50 angrenzt.

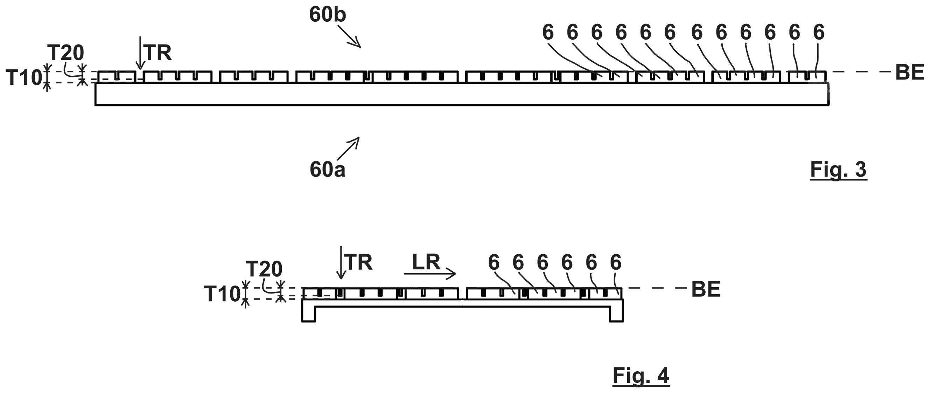

Die Ableitkanäle 11, 12 haben eine Ableitkanaltiefe T10, die in eine zur Betriebsebene BE rechtwinklige Tiefenrichtung TR gemessen wird (sh. Fig. 3 und 4). Die Sammelkanäle 21, 22 haben eine Sammelkanaltiefe T20, die ebenso in die Tiefenrichtung TR gemessen wird. Die Sammelkanaltiefe T20 ist kleiner als die Ableitkanaltiefe T10. Außerdem ist eine Sammelkanalbreite B20 der Sammelkanäle 21, 22 kleiner als eine Ableitkanalbreite B10 der Ableitkanäle 11, 12.

Benachbarte zweite Sammelkanäle 22 haben einen Sammelabstand A22 voneinander, der einem Sammelabstand A21 zweier benachbarter erster Sammelkanäle 21 entspricht. Dadurch hat jede Gruppe I, II, III (Bezugszeichen exemplarisch vergeben) in der Draufsicht quadratische Kontaktelemente 1, 2, 3, 4, 5, 6 in einer Art Schachbrettmuster. Die Gruppen I, II, III sind jeweils durch Ableitkanäle 11, 12 voneinander getrennt. Die ersten Ableitkanäle 11 haben leicht variierende Abstände (exemplarisch Abstand A11 eingezeichnet) voneinander; auch die zweiten Ableitkanäle 12 haben variierende Abstände voneinander (exemplarisch Abstand A12 eingezeichnet). Die Abstände A11, A12 entsprechen im Wesentlichen den Breiten und Höhen der Gruppen I, II, III.

Der überwiegende Teil der Kontaktelemente 2, 3, 4, 6 ist in der Draufsicht quadratisch ausgebildet. Weitere der Kontaktelemente 1, 5, 6 weisen eine Kontur mit einem bogenförmigen Abschnitt bzw. einer Rundung 1a auf, mit der das jeweilige Kontaktelement 1, 5, 6 an einen der ersten Ableitkanäle 11 und an einen der zweiten Ableitkanäle 12 angrenzt. Das gesamte Kontaktsegment 50 hat eine in die Laufrichtung LR gemessene Länge L50, die kleiner ist als eine quer zur Längsrichtung LR gemessene Breite des Kontaktsegmentes B50.

### Bezugszeichenliste

- 1: erstes Kontaktelement
- 1a: Rundung
- 2: zweites Kontaktelement
- 3: drittes Kontaktelement
- 4: viertes Kontaktelement
- 5: fünftes Kontaktelement
- 6: weiteres Kontaktelement
- 11: erster Ableitkanal
- 12: zweiter Ableitkanal
- 21: erster Sammelkanal
- 22: zweiter Sammelkanal
- 50: Kontaktsegment
- 60: Raupenband
- 60a: Innenseite
- 60b: Außenseite
- 65: Umlenkrolle
- 66: Stützrolle
- 70: Raupenlaufwerk
- 80: Oberflächenbehandlungsvorrichtung
- 90: Fahrzeugrahmen
- 100: Fahrzeug

- A11: Abstand erster Ableitkanäle
- A12: Abstand zweiter Ableitkanäle
- A21: Abstand erster Sammelkanäle
- A22: Abstand zweiter Sammelkanäle
- B10: Ableitkanalbreite
- B20: Sammelkanalbreite
- B50: Kontaktsegmentbreite
- BE: Betriebsebene
- E1: erstes Ende des Kontaktsegmentes
- E2: zweites Ende des Kontaktsegmentes
- L50: Kontaktsegmentlänge
- LR: Laufrichtung
- R11: erste Ableitkanalrichtung
- R12: zweite Ableitkanalrichtung
- R21: erste Sammelkanalrichtung
- R22: zweite Sammelkanalrichtung
- T10: Ableitkanaltiefe
- T20: Sammelkanaltiefe
- TR: Tiefenrichtung

## Patentansprüche

1. Raupenband (60), das zur Ausbildung eines Raupenlaufwerkes (70) eines Fahrzeuges (100) zur Behandlung geneigter Oberflächen und zum Umlaufen von Umlenkrollen (65) des Raupenlaufwerkes (70) in eine Laufrichtung (LR) ausgebildet ist und eine den Umlenkrollen (65) zuzuwendende Innenseite (60a) und eine von den Umlenkrollen (65) abzuwendende Außenseite (60b) aufweist, die zumindest teilweise von zumindest einem vom Raupenband (60) umfassten Kontaktsegment (50) ausgebildet ist, das mehrere Kontaktelemente (1, 2, 3, 4, 5, 6) aufweist, die von der Innenseite (60a) abgewandt abstehend und zumindest in einer Betriebsstellung an eine Betriebsebene (BE) angrenzend angeordnet sind, und zumindest zwischen einem ersten der Kontaktelemente (1) und einem zweiten der Kontaktelemente (2) zumindest einen ersten an die Betriebsebene (BE) angrenzenden Ableitkanal (11) ausbildet, der sich zumindest abschnittsweise länglich in eine erste zur Betriebsebene (BE) parallele Ableitkanalrichtung (R11) erstreckt und eine in eine zur Betriebsebene (BE) rechtwinklige Tiefenrichtung (TR) gemessene Ableitkanaltiefe (T10) hat,
**dadurch gekennzeichnet,**
**dass** das Kontaktsegment (50) zwischen dem ersten Kontaktelement (1) und einem dritten der Kontaktelemente (3) zumindest einen ersten an die Betriebsebene (BE) angrenzenden Sammelkanal (21) ausbildet, der sich derart zumindest abschnittsweise länglich in eine erste Sammelkanalrichtung (R21), die zur Betriebsebene (BE) parallel und zur ersten Ableitkanalrichtung (R11) angewinkelt ist, erstreckt, dass der erste Sammelkanal (21) in den ersten Ableitkanal (11) mündet, und eine in die Tiefenrichtung (TR) gemessene Sammelkanaltiefe (T20) hat, die kleiner als die Ableitkanaltiefe (T10) ist.

2. Raupenband (60) nach Anspruch 1,
**dadurch gekennzeichnet,**
**dass** die Sammelkanaltiefe (T20) mindestens halb so groß ist wie die Ableitkanaltiefe (T10), bevorzugt zumindest im Wesentlichen zwei Drittel der Ableitkanaltiefe (T10) beträgt.

3. Raupenband (60) nach Anspruch 1 oder 2,
**dadurch gekennzeichnet,**
**dass** eine quer zur ersten Sammelkanalrichtung (R21) und parallel zur Betriebsebene (BE) gemessene Sammelkanalbreite (B20) kleiner ist als eine quer zur ersten Ableitkanalrichtung (R11) und parallel zur Betriebsebene (BE) gemessene Ableitkanalbreite (B10), wobei die Sammelkanalbreite (B20) höchstens halb so groß ist wie die Ableitkanalbreite (B10), bevorzugt zumindest im Wesentlichen ein Drittel der Ableitkanalbreite (B10) beträgt.

4. Raupenband (60) nach einem der vorhergehenden Ansprüche,
**gekennzeichnet durch**
mehrere erste Sammelkanäle (21), die voneinander beabstandet in den ersten Ableitkanal (11) münden und/oder zumindest zwei erste Ableitkanäle (11), in die der zumindest eine erste Sammelkanal (21) mündet.

5. Raupenband (60) nach einem der vorhergehenden Ansprüche,
**dadurch gekennzeichnet,**
**dass** das Kontaktsegment (50) zwischen dem ersten Kontaktelement (1) und einem vierten der Kontaktelemente (4) zumindest einen zweiten an die Betriebsebene (BE) angrenzenden Sammelkanal (22) ausbildet, der sich zumindest abschnittsweise länglich in eine zweite Sammelkanalrichtung (R22), die zur Betriebsebene (BE) parallel und zur ersten Sammelkanalrichtung (R21) angewinkelt ist, erstreckt, und in den ersten Sammelkanal (21) mündet oder den ersten Sammelkanal (21) kreuzt, wobei insbesondere zwei benachbarte zweite Sammelkanäle (22) einen zweiten Sammelabstand (A22) voneinander haben, der einem ersten Sammelabstand (A21) zweier benachbarter erster Sammelkanäle (21) voneinander entspricht.

6. Raupenband (60) nach einem der vorhergehenden Ansprüche,
**dadurch gekennzeichnet,**
**dass** der zumindest eine erste Sammelkanal (21) oder der zumindest eine zweite Sammelkanal (22) wenigstens einseitig durch zumindest vier, bevorzugt durch zumindest sechs, besonders bevorzugt durch zumindest acht, Kontaktelemente (1, 4) begrenzt ist.

7. Raupenband (60) nach einem der vorhergehenden Ansprüche,
**dadurch gekennzeichnet,**
**dass** das Kontaktsegment (50) zwischen dem ersten Kontaktelement (1) und einem fünften der Kontaktelemente (5) zumindest einen zweiten an die Betriebsebene (BE) angrenzenden Ableitkanal (12) ausbildet, der sich länglich in eine zweite zur Betriebsebene (BE) parallele Ableitkanalrichtung (R12) erstreckt, die zur ersten Ableitkanalrichtung (R11) angewinkelt ist, und in den ersten Ableitkanal (11) mündet oder den ersten Ableitkanal (11) kreuzt.

8. Raupenband (60) nach einem der vorhergehenden Ansprüche,
**dadurch gekennzeichnet,**
**dass** zwischen zwei ersten Ableitkanälen (11) und/oder zwischen zwei zweiten Ableitkanälen (12) unterschiedliche große Gruppen (I, II, III) von Kontaktelementen (1, 2, 3, 4, 5, 6) angeordnet sind, wobei die Kontaktelemente (1, 2, 3, 4, 5, 6) jeder Gruppe (I, II, III) in einer Draufsicht durch zumindest einen ersten Sammelkanal (21) und/oder durch zumindest einen zweiten Sammelkanal (22) voneinander beabstandet sind.

9. Raupenband (60) nach einem der vorhergehenden Ansprüche,
**dadurch gekennzeichnet,**
**dass** die Zahl von zueinander parallelen ersten Ableitkanälen (11) oder von zueinander parallelen ersten Sammelkanälen (21) größer als fünf, bevorzugt größer als acht, besonders bevorzugt größer als zehn, ist.

10. Raupenband (60) nach einem der vorhergehenden Ansprüche,
**dadurch gekennzeichnet,**
**dass** zumindest ein Teil der Kontaktelemente (1, 2, 3, 4, 5, 6) in einer Draufsicht eine rechteckige, insbesondere quadratische, Kontur aufweist.

11. Raupenband (60) nach einem der vorhergehenden Ansprüche,
**dadurch gekennzeichnet,**
**dass** zumindest eines der Kontaktelemente (1, 2, 3, 4, 5, 6), insbesondere das erste Kontaktelement (1), in einer Draufsicht eine den ersten Ableitkanal (11) und einen/den zweiten Ableitkanal (12) begrenzende Kontur mit einer Rundung, die insb. viertelkreisförmig ausgebildet ist, aufweist.

12. Raupenband (60) nach einem der vorhergehenden Ansprüche,
**gekennzeichnet durch**
eine Mehrzahl insbesondere gleicher Kontaktsegmente (50) umfasst, die in die Laufrichtung (LR) versetzt zueinander angeordnet sind.

13. Raupenband (60) nach einem der vorhergehenden Ansprüche,
**dadurch gekennzeichnet,**
**dass** eine quer zur Laufrichtung (LR) gemessene Breite (B50) des zumindest einen Kontaktsegmentes (50) zumindest im Wesentlichen einer Breite des Raupenbandes (50) entspricht.

14. Raupenband (60) nach einem der vorhergehenden Ansprüche,
**dadurch gekennzeichnet,**
**dass eine** in die Laufrichtung (LR) gemessene Längserstreckung des Kontaktsegmentes (50) kleiner ist als eine/die quer zur Laufrichtung (LR) des Raupenbandes (60) gemessene Breite (B50) des Kontaktsegmentes (50).

15. Fahrzeug (100) zur Behandlung geneigter Oberflächen, aufweisend
- einen Fahrzeugrahmen (90),
- eine am Fahrzeugrahmen (90) angeordnete Oberflächenbehandlungsvorrichtung (80), die insbesondere zur Aufbringung einer Reinigungsflüssigkeit auf die Oberflächen ausgebildet ist, und
- ein Fahrwerk, das zum Fahren auf der Oberfläche ausgebildet ist und zumindest ein Raupenlaufwerk (70) aufweist, das
∘ zumindest zwei Umlenkrollen (65) und
∘ zumindest ein im Betrieb um die Umlenkrollen (65) umlaufendes Raupenband (60) nach einem der vorstehenden Ansprüche umfasst.
